# EUROPÄISCHE PATENTSCHRIFT

(11) **EP 2 340 616 B1**
(45) Veröffentlichungstag und Bekanntmachung des Hinweises auf die Patenterteilung: **16.03.2016**
(21) Anmeldenummer: 09781927.0
(22) Anmeldetag: 18.08.2009
(51) Int. Cl.: H04B 5/00, A47B 81/00, B64D 11/04

(54) **VERSCHLIESSBARE EINRICHTUNG MIT DATEN- UND ENERGIEÜBERTRAGUNG DURCH ELEKTROMAGNETISCHE INDUKTION**
SEALABLE APPARATUS WITH DATA- AND ENERGY TRANSMISSION THROUGH ELECTROMAGNETIC INDUCTION
DISPOSITIF REFERMABLE À TRANSMISSION DE DONNÉES ET D'ÉNERGIE PAR INDUCTION ÉLECTROMAGNÉTIQUE

(30) Priorität: 23.09.2008 DE 102008048500; 23.09.2008 US 192921 P
(43) Veröffentlichungstag der Anmeldung: 06.07.2011
(73) Patentinhaber: Airbus Operations GmbH, 21129 Hamburg (DE)
(72) Erfinder: BAATZ, Andreas, 21644 Sauensiek (DE)
(74) Vertreter: Kopf, Korbinian Paul
(86) Internationale Anmeldenummer: PCT/EP2009/060642
(87) Internationale Veröffentlichungsnummer: WO 2010/034572

(56) Entgegenhaltungen:
- WO-A2-2006/062491
- DE-A1- 19 832 911

## Beschreibung

Die Erfindung betrifft eine verschließbare Einrichtung, insbesondere eine verschließbare Einrichtung in Form eines Waschraums, einer Bordkücheneinrichtung, eines Ofens, einem Kühlschranks, oder eines Lebensmittellagers, und einem Verschlusselement, was die entsprechende Einrichtung verschließt. Genauer betrifft die Erfindung eine verschließbare Einrichtung an Bord eines Flugzeugs.

Bekanntlich ist es möglich Informationen über den Inhalt der Einrichtung, insbesondere die Anzahl und Art der eingelagerten Gegenstände, Zeitpunkt der Einlagerung der Gegenstände, Verfallsdatum der Gegenstände, Temperatur, Luftfeuchtigkeit und Luftdruck innerhalb der verschließbaren Einrichtung, zu erlangen indem der Verschluss der Einrichtung geöffnet wird, und die Gegenstände einzeln überprüft werden. Ferner bietet können die Informationen, zumindest zum Teil, mittels eines Sichtfenster erlangt werden.

Ausgehend von einem zentralen oder dezentralen Informationsspeicher und vorhandener RFID-Technologie, kann bei bekannten verschließbaren Einrichtungen, deren Verschlusselement keine oder nur eine begrenzte translatorische Bewegung ausführt die Informationsübertragung mittels Kabeln zu einem Bildschirm geführt und dort angezeigt werden. Allerdings kann bei Kabeln, insbesondere bei Folienkabeln, eine mechanische Biege- oder Drehbelastung des Kabels bei äußerer mechanischer Einwirkung entstehen, die der Übertragungssicherheit entgegensteht. Ferner ergibt sich je nach Anzahl und Durchmesser der Adern, Kabellänge und Umgebungstemperatur am Kabel eine Steifigkeit, die einem flexiblen Gebrauch der Einrichtung entgegensteht. Dies gilt insbesondere für mechanisch translatorisch bewegliche Elemente, die elektrisch mittels eines Kabels oder mehrerer Kabel verbunden sind, da die mechanische Bewegung durch das/die Kabel erschwert und behindert wird.
Bei Flugzeugen führt die bekannte Übertragung von Energie- und Information durch Kabel zu einer unerwünschten Gewichtszunahme und dem damit verbundenen erhöhten Kerosinverbrauch.

Kabellose Signalübertragung im Bereich Flugzeugbau ist aus der WO 2007/006749 A1 und der DE 10 2005 032 bekannt.

WO 2006/062491 A2 beschreibt einen Kühlschrank mit einer Schwingtür. Es ist ein Display vorgesehen, welches es dem Benutzer ermöglicht, Informationen über den Inhalt des Kühlschranks zu erhalten, ohne hierfür den Kühlschrank zu öffnen. Um diese Informationen zu erhalten, ist beispielsweise ein Barcodeleser vorgesehen.

DE 198 32 911 A1 beschreibt eine Vorrichtung zur Signalübertragung in einem Fahrzeug. In oder an einer Seitenscheibe ist eine Antennenspule angeordnet, welche induktiv Energie und Signale mit einer Koppelspule austauschen kann.

Aufgabe der Erfindung ist es eine flexibel einsetzbare Übertragung von Informationen für verschließbare Einrichtungen zu schaffen, wobei durch den Übertragungsweg möglichst wenig zusätzliches Gewicht anfallen soll und wobei die Information für den Nutzer leicht zugänglich und erfassbar aufbereitet ist.

Die Aufgabe wird durch eine verschließbare Einrichtung nach Anspruch 1 gelöst.

Die verschließbare Einrichtung umfasst eine Aufnahmeeinrichtung zur Aufnahme eines Inhalts, aufweisend eine Verschlussöffnung und eine erste Antenne, und ein Verschlusselement zum Verschließen der Verschlussöffnung in einer Verschlussposition. Das Verschlusselement umfasst eine zweite Antenne und eine Anzeigeeinrichtung zum Anzeigen von Inhaltsinformationen über den innerhalb der Einrichtung befindlichen Inhalt. Die erste Antenne liegt der zweiten Antenne in der Verschlussposition dicht gegenüber. In der Verschlussposition wird ein Datenprotokoll für die Inhaltsinformation und elektrische Energie zum Betrieb der Anzeigevorrichtung durch elektromagnetische Induktion von der ersten Antenne zu der zweiten Antenne übertragen.

Durch die kabellose Übertragung von Energie und Daten mittels der elektromagnetischen Kopplung entfällt eine Kabelverbindung und damit die vorbenannten Nachteile. Auf Batterien kann ebenso verzichtet werden, wie auf große Kondensatoren oder andere Energiespeicher, da Informationen und damit die Energie für die Anzeigeeinrichtung nur dann benötigt werden, wenn sich das Verschlusselement in der Verschlussstellung befindet. Ein Stand-by-Betrieb der Verschlusseinrichtung kann entfallen.

In einem Ausführungsbeispiel ist es bevorzugt, wenn in der Verschlussposition Daten durch elektromagnetische Induktion von der zweiten Antenne zu der ersten Antenne übertragen werden. Mit anderen Worten kann die Informationsübertragung bidirektional über die beiden Antennen erfolgen. Bei den Antennen kann es sich um Spulen mit einer Kupferwicklung handeln, die zueinander auf jede an sich bekannte Weise angeordnet werden können. Eine Anordnung bei der die Wickelachsen jeder Spule in der Verschlussposition auf einer Geraden liegen, wo sich also Spulenkerne gegenüberliegen, ist allerdings eine bevorzugte Anordnung.

Die bidirektionale Datenübertragung kann in einem weiteren Ausführungsbeispiel genutzt werden, wenn das Verschlusselement, etwa eine Schiebetür, eine Eingabevorrichtung, insbesondere in Form einer Folientastatur oder eines Schaltelements, aufweist. Handelt es sich bei der verschließbaren Einrichtung um einen Ofen oder einen Kühlschrank oder einen anderen Lebensmittelaufbewahrungsort, etwa eine Galley, so kann mittels der Eingabevorrichtung die an der Anzeigevorrichtung angezeigte Innentemperatur verstellt werden.

In einem weiteren Ausführungsbeispiel weist das Verschlusselement oder die Aufnahmeeinrichtung noch mindestens ein Empfangselement, insbesondere in Form eines Sensor, eines Infrarot-Detektors, oder eines Funkempfängers auf.

Befindet sich etwa ein Produkt mit einem RFID-Chip in der Verschlussöffnung, kann die auf dem RFID-Chip gespeicherten Informationen von dem Empfangselement in Form eines Funkempfängers empfangen werden.

Die verschließbare Einrichtung kann ein Waschraum, eine Bordkücheneinrichtung, ein Ofen, ein Kühlschrank oder ein Lebensmittellager, insbesondere an Bord eines Flugzeugs sein. Für diese Einrichtungen bietet die kabellose Übertragung von Information und Energie eine ideale und passende Ergänzung für den Informationsbedarf eines Nutzers. Denn nur während der Verschlussstellung wird die Information zur Verfügung gestellt werden und nur in dieser Stellung wird die Information auch benötigt. Ferner insbesondere bei den vorgenannten Einrichtungen sichergestellt, dass bei der Anzeige von Inhaltsinformation die Verschlussstellung tatsächlich erreicht ist, was einen zusätzlichen Sicherheitsvorteil bedeutet und die Überprüfung von geschlossenen Türen erheblich vereinfacht, da ein kurzer Blick auf die Anzeigeeinheit genügt, in diesem Fall auch ohne die gelieferten Informationen kognitiv erfassen zu müssen.

In einer weiteren Ausführung ist vorgesehen, dass die verschließbare Einrichtung eine Mehrzahl von Aufnahmeeinrichtungen jeweils zur Aufnahme eines Inhalts aufweist und eine Mehrzahl von Verschlusselementen aufweist, und wobei jedes Verschlusselement derart geführt ist, dass es jede der Aufnahmeeinrichtungen in der Verschlussposition verschließen kann. Die Unabhängigkeit hinsichtlich der Zuordnung ist besonders vorteilhaft. Insbesondere ist hier ein Vorteil, dass die Energieversorgung ebenfalls über Induktion erfolgt. In einem Fall von eigener Energiebereitstellung der Verschlusselemente, etwa durch Batterien, besteht die Gefahr, dass theoretisch der Inhalt jeder Aufnahmeeinrichtung bei fehlender oder zu schwacher Energie eines einzigen Verschlusselementes im laufenden Betrieb nicht angezeigt wird. Außerdem entfällt vorteilhafter Weise die Wartung oder der Ersatz der Batterien.

In einer weiteren Ausführung ist es ferner bevorzugt, dass ein erstes Verschlusselement der verschließbare Einrichtung an einem zweiten Verschlusselement, das sich in der Verschlussposition befindet, seitlich vorbeiführbar ist. Dies erhöht weiterhin den flexiblen Einsatz der verschließbaren Einrichtung.

In einer weiteren Ausführung ist es bevorzugt wenn die Verschlusselemente durch Schienen oder eine Kulissenführung gehaltert und geführt sind. Bei einer Mehrzahl von Schienen oder Kulissenführungen können Weichenelemente notwendig sein, um die Verschlusselemente auf andere Schienen zu überführen. Selbstverständlich nicht nur durch diese Ausführung ist grundsätzlich jedes Verschlusselement mit jeder Aufnahmeeinrichtung in Verschlussstellung zu bringen.

Die erfindungsgemäße Einrichtung eignet sich insbesondere für den Einsatz an Bord von Flugzeugen. Es versteht sich aber, dass auch andere Transportmittel mit ähnlichen konstruktiven Einschränkungen ebenfalls sehr geeignet sind, wie zum Beispiel Züge, Schiffe, U-Boote oder Busse.

Anhand der folgenden Zeichnungen soll die Erfindung näher veranschaulicht werden. Die Zeichnungen sind nur als Prinzipskizzen zu verstehen und bedeuten keinerlei Einschränkung für die Erfindung. Es zeigt
Fig. 1 in einer schematischen Draufsicht einen Schnitt durch eine verschließbare Einrichtung,
Fig. 2 ein Verschlusselement der in Fig. 1 gezeigten Einrichtung in einer Draufsicht.

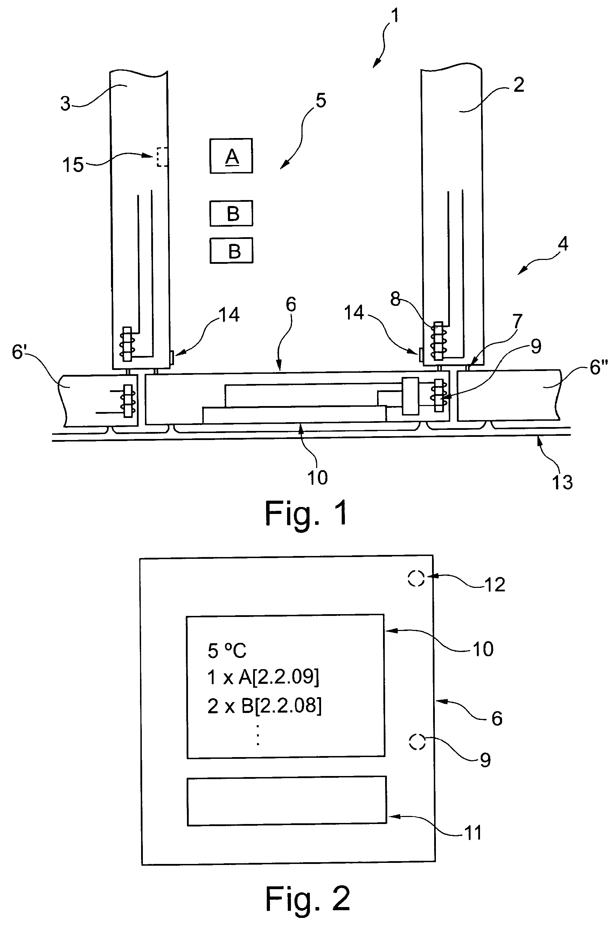

Die in Fig. 1 schematisch gezeigte verschließbare Einrichtung 1 weist zwei Wandungen 2, 3 auf, die zu einer Aufnahmeeinrichtung 4 gehören, und diese nach außen begrenzen. Der Inhalt 5 der Aufnahmeeinrichtung 4, hier ausgebildet als Galleybox für Warm- oder Kaltspeisen für die Passagiere eines Flugzeugs besteht aus drei Produkten, einem Produkt A und zwei Produkten B. Ein Verschlusselement 6 schließt in einer Verschlussposition die Aufnahmeeinrichtung 4 hermetisch nach außen ab, was insbesondere durch Dichtlippen 7 erreicht wird.

Das Verschlusselement 6 weist ferner eine Anzeigeeinrichtung 10 in Form eines flachen LCD-Displays auf.

Die rechte Wandung 2 der Aufnahmeeinrichtung weist eine Antenne 8 in Form einer Kupferspule auf, die einer weiteren Antenne 9, welche in dem Verschlusselement integriert ist dicht gegenüberliegt.

In der Verschlussposition wird ein Datenprotokoll für die Inhaltsinformation und elektrische Energie zum Betrieb der Anzeigevorrichtung durch elektromagnetische Induktion von der ersten Antenne zu der zweiten Antenne auf an sich bekannte Weise übertragen.

Dazu können Signale vor Einspeisung in die Antenne 8 und/oder 9 nach auf an sich bekannte Weise moduliert, kodiert/dekodiert, getaktet, gefiltert oder anderweitig aufbereitet werden. Es kann eine Signalaufbereitungseinheit vorgesehen sein, in der die Dateninformation von der Energieübertragung getrennt und weiter für die Anzeige auf der Anzeigeeinheit 10 aufbereitet wird. Eine weitere Signalaufbereitungseinheit, enthaltend etwa Mikroprozessor, Speicher, Taktgeber, Filter ist vor die Antenne 8 geschaltet, hier jedoch nicht gezeigt.

In Fig. 2 ist nochmals das Verschlusselement 6 und die Antenne 9 sowie die Anzeigeeinrichtung 10 zum Anzeigen von Inhaltsinformationen über den innerhalb der Aufnahmeeinrichtung befindlichen Inhalt verdeutlicht. Zu erkennen ist, dass neben der Anzahl und Typ der Produkte (1 x A, 2 x B), auch mehrmals ein Datum, etwa ein Verfalls oder Einlagerungsdatum zu den Produkten angezeigt wird. Ferner wird die Temperatur im Innenraum der Aufnahmeeinrichtung angezeigt (5 Grad Celsius).

Ferner zeigt Fig. 2 eine Eingabevorrichtung 11 in Form einer Folientastatur, mittels der bei entsprechender Menüführung etwa die Temperatur verändert werden kann. Da dem Verschlusselement 6 in Form der Schiebetür nur in der Verschlussposition Energie zugeführt wird, muss mit der Eingabe gewartet werden, bis der Initialisierungsprozess für die Einbindung des Displays 10 an die Energiezufuhr und für die Datenübergabe beendet, und ein Datenübertragungsprotokoll entsprechend abgeschlossen ist. Mittels der Folientastatur 11 werden Daten durch elektromagnetische Induktion von der zweiten Antenne 9 zu der ersten Antenne 8 übertragen, (bidirektionale Nutzung).

Außerdem zeigt Fig. 2 ein Empfangselement 12 in Form eines Infrarot-Detektors, wobei hier die Detektion von Nutzern im Bereich des Verschlusselements ermöglicht wird. Kommt etwa eine Person nahe an die Anzeigeanrichtung heran und unterschreitet dabei einen vorbestimmbaren Abstand, so kann eine andere Information angezeigt werden als zuvor, etwa eine ausführlichere Information mit kleinerer Schriftgröße.

Zurückkommend auf die Fig. 1 ist dort angedeutet, das die verschließbare Einrichtung eine Mehrzahl von nebeneinander angeordneten Aufnahmeeinrichtungen 4 jeweils zur Aufnahme eines Inhalts besitzt und eine Mehrzahl von Verschlusselementen 6, 6', 6" aufweist, und wobei jedes Verschlusselement 6, 6', 6" derart geführt ist, dass es jede der Aufnahmeeinrichtungen 4 in der Verschlussposition verschließen kann, wobei ein erstes Verschlusselement 6' der verschließbare Einrichtung an einem zweiten Verschlusselement 6, das sich in der Verschlussposition befindet, seitlich vorbeiführbar ist. Gezeigt ist außerdem, dass die Verschlusselemente durch eine Kulissenführung 13 gehaltert und geführt sind.

Ferner weist die Aufnahmeeinrichtung noch Elemente 14 zur Detektion von RFID-Tags auf, wodurch der Inhalt der verschließbaren Einrichtung stets aktualisiert werden kann. Außerdem ist noch ein Temperaturfühler 15 zur Ermittlung der Innentemperatur der Aufnahmeeinrichtung 4 vorgesehen.

## Patentansprüche

1. Verschließbare Einrichtung (1) mit
- einer Aufnahmeeinrichtung (4) zur Aufnahme eines Inhalts (5), aufweisend eine Verschlussöffnung und eine erste Antenne (8);
- einem Verschlusselement (6) zum Verschließen der Verschlussöffnung in einer Verschlussposition;
wobei das Verschlusselement (6) eine Schiebetür ist und eine zweite Antenne (9) und eine Anzeigeeinrichtung (10) zum Anzeigen von Inhaltsinformationen über den innerhalb der Aufnahmeeinrichtung (4) befindlichen Inhalt (5) aufweist;
wobei die erste Antenne (8) der zweiten Antenne (9) in der Verschlussposition dicht gegenüberliegt;
wobei nur in der Verschlussposition ein Datenprotokoll für die Inhaltsinformation und elektrische Energie zum Betrieb der Anzeigevorrichtung (10) durch elektromagnetische Induktion von der ersten Antenne (8) zu der zweiten Antenne (9) übertragen wird,
wobei das Verschlusselement (6) ein Empfangselement (12) aufweist, insbesondere in Form eines Sensors, eines Infrarot-Detektors, oder eines Funkempfängers, welches es ermöglicht, die Anwesenheit von Nutzern im Bereich der Anzeigeeinrichtung (10) und den Abstand dieser Nutzer von der Anzeigeeinrichtung zu detektieren.

2. Verschließbare Einrichtung (1) nach Anspruch 1,
wobei die Anzeigeeinrichtung (10) so konfiguriert ist, dass angezeigte Inhaltsinformationen bei Unterschreitung eines vorgebbaren Abstands zur Anzeigeeinrichtung (10) durch einen Nutzer in detaillierterer Form dargestellt werden.

3. Verschließbare Einrichtung (1) nach Anspruch 2, wobei in der Verschlussposition Daten durch elektromagnetische Induktion von der zweiten Antenne (9) zu der ersten Antenne (8) übertragen werden.

4. Verschließbare Einrichtung (1) nach einem der Ansprüche 1 bis 3, wobei das Verschlusselement (6) eine Eingabevorrichtung (11), insbesondere in Form einer Folientastatur oder eines Schaltelements, aufweist

5. Verschließbare Einrichtung (1) nach einem der Ansprüche 1 bis 4, wobei die Aufnahmeeinrichtung (4) zur Aufnahme eines Inhalts (5) ein Waschraum, eine Bordkücheneinrichtung, ein Ofen, ein Kühlschrank oder ein Lebensmittellager ist.

6. Verschließbare Einrichtung (1) nach einem der Ansprüche 1 bis 5, wobei die Verschließbare Einrichtung (1) eine Mehrzahl von Aufnahmeeinrichtungen (4) jeweils zur Aufnahme eines Inhalts (5) aufweist und eine Mehrzahl von Verschlusselementen (6, 6', 6") aufweist, und wobei jedes Verschlusselement (6, 6', 6") derart geführt ist, dass es jede der Aufnahmeeinrichtungen (4) in der Verschlussposition verschließen kann.

7. Verschließbare Einrichtung (1) nach einem der Ansprüche 1 bis 6, aufweisend ein weiteres, zweites Verschlusselement (6'), wobei das erste Verschlusselement (6') der verschließbaren Einrichtung (1) an dem zweiten Verschlusselement (6), das sich in der Verschlussposition befindet, seitlich vorbeiführbar ist.

8. Verschließbare Einrichtung (1) nach Anspruch 6 oder 7, wobei die Verschlusselemente durch Schienen oder eine Kulissenführung (13) gehaltert und geführt sind.

9. Flugzeug mit einer verschließbare Einrichtung (1) nach einem der nach einem der Ansprüche 1 bis 8.

## Claims

1. A closable device (1) comprising
- a holding device (4) for holding a content (5), comprising a closure opening and a first antenna (8);
- a closure element (6) for closing the closure opening in a closure position;
wherein the closure element (6) is a sliding door and comprises a second antenna (9) and a display device (10) for displaying content information relating to the content (5) present within the holding device (4);
wherein in the closure position the first antenna (8) is in the vicinity of and opposite the second antenna (9);
wherein only in the closure position a data protocol for content information as well as electrical energy for operating the display device (10) are transmitted, by means of electromagnetic induction, from the first antenna (8) to the second antenna (9); wherein the closure element comprises a receiving element (12), in particular in the form of a sensor, an infrared detector or a radio receiver, which allows to detect the presence of users in the vicinity of the display device (10) and the distance of the users from the display device.

2. The closable device (1) of claim 1,
wherein the display device (10) is configured such that displayed content information are displayed in detail, if a distance between a user and the display device (10) falls below a predetermined distance.

3. The closable device (1) of claim 2, wherein in the closure position data is transmitted by way of electromagnetic induction from the second antenna (9) to the first antenna (8).

4. The closable device (1) of one of claims 1 to 3, wherein the closure element (6) comprises an input device (11), in particular in the form of a membrane keyboard or a circuit element.

5. The closable device (1) of any one of claims 1 to 4, wherein the holding device (4) for holding a content (5) is a lavatory, a galley device, an oven, a refrigerator, or a food store.

6. The closable device (1) of any one of claims 1 to 5, wherein the closable device (1) comprises a plurality of holding devices (4) in each case designed to hold a content (5), and comprises a plurality of closure elements (6, 6', 6"), and wherein each closure element (6, 6', 6") is designed in such a manner that it can close each and any of the holding devices (4) in the closure position.

7. The closable device (1) of any one of claims 1 to 6, comprising an additional second closure element (6'), wherein the first closure element (6') of the closable compartment (1) can be laterally led past a second closure element (6') that is in the closure position.

8. The closable device (1) of claim 6 or 7, wherein the closure elements are held and guided by rails or a sliding guide (13).

9. An aircraft comprising a closable device (1) of any one of claims 1 to 8.

## Revendications

1. Dispositif refermable (1) comprenant :
- un moyen de réception (4) destiné à recevoir un contenu (5), présentant un orifice de fermeture et une première antenne (8) ;
- un élément de fermeture (6) destiné à fermer l'orifice de fermeture dans une position de fermeture ;
dans lequel l'élément de fermeture (6) est une porte coulissante et présente une seconde antenne (9) et un moyen d'affichage (10) destiné à afficher des informations sur le contenu (5) se trouvant à l'intérieur du moyen de réception (4) ;
dans lequel la première antenne (8) est en regard immédiat de la seconde antenne (9) dans la position de fermeture ;
dans lequel un protocole de données pour l'information sur le contenu et l'énergie électrique destinée au fonctionnement du moyen d'affichage (10) par induction électromagnétique est transmis de la première antenne (8) vers la seconde antenne (9) uniquement dans la position de fermeture,
dans lequel l'élément de fermeture (6) présente un élément récepteur (12), en particulier sous la forme d'un capteur, d'un détecteur à infrarouge, ou d'un récepteur radioélectrique qui permet de détecter la présence d'utilisateurs au niveau du moyen d'affichage (10) et la distance de ces utilisateurs par rapport au moyen d'affichage.

2. Dispositif refermable (1) selon la revendication 1,
dans lequel le moyen d'affichage (10) est configuré de telle sorte que des informations de contenu affichées sont représentées sous forme détaillée en cas de dépassement d'une distance prédéfinissable par rapport au moyen d'affichage (10) par un utilisateur.

3. Dispositif refermable (1) selon la revendication 2, dans lequel, dans la position de fermeture, des données sont transmises par induction électromagnétique de la seconde antenne (9) vers la première antenne (8).

4. Dispositif refermable (1) selon une des revendications 1 à 3, dans lequel l'élément de fermeture (6) présente un dispositif d'entrée (11), en particulier sous la forme d'un clavier à membrane ou d'un élément de commutation.

5. Dispositif refermable (1) selon une des revendications 1 à 4, dans lequel le moyen de réception (4) destiné à recevoir un contenu (5) est un cabinet de toilettes, une installation de cuisine à bord, un four, un réfrigérateur ou une réserve pour aliments.

6. Dispositif refermable (1) selon une des revendications 1 à 5, dans lequel le dispositif refermable (1) présente une pluralité de moyens de réception (4) chacun pour recevoir un contenu (5) et présente une pluralité d'éléments de fermeture (6, 6', 6"), et dans lequel chaque élément de fermeture (6, 6', 6") est guidé de telle sorte qu'il peut fermer chacun des moyens de réception (4) dans la position de fermeture.

7. Dispositif refermable (1) selon une des revendications 1 à 6, présentant un autre second élément de fermeture (6'), dans lequel le premier élément de fermeture (6') du dispositif refermable (1) peut être passé latéralement devant le second élément de fermeture (6) qui se trouve dans la position de fermeture.

8. Dispositif refermable (1) selon la revendication 6 ou 7, dans lequel les éléments de fermeture sont maintenus et guidés par des rails ou un guide-coulisse (13).

9. Avion comprenant un dispositif refermable (1) selon une des revendications 1 à 8.
